## Europäisches Patentamt
## European Patent Office
## Office européen des brevets

(11) Veröffentlichungsnummer: **0 076 920**
**B1**

(12) **EUROPÄISCHE PATENTSCHRIFT**

(51) Int. Cl.⁴: **G 01 D 15/28**

(45) Veröffentlichungstag der Patentschrift:
22.07.87

(21) Anmeldenummer: **82107990.2**

(22) Anmeldetag: **31.08.82**

(54) Automatische Aufwickelvorrichtung für Registriergeräte.

(30) Priorität: **09.10.81 DE 3140196**

(43) Veröffentlichungstag der Anmeldung:
**20.04.83 Patentblatt 83/16**

(45) Bekanntmachung des Hinweises auf die Patenterteilung:
**22.07.87 Patentblatt 87/30**

(84) Benannte Vertragsstaaten:
**CH FR GB LI**

(56) Entgegenhaltungen:
**DE-A-2 312 846**
**DE-B-1 126 696**
**US-A-3 241 784**

(73) Patentinhaber: **VDO Adolf Schindling AG,
Gräfstrasse 103, D-6000 Frankfurt/Main (DE)**

(72) Erfinder: **Twisselmann, Lorenz, Dr., Am
Sahlgarten 8, D-3004 Isernhagen 4 (DE)**

(74) Vertreter: **Könekamp, Herbert, Dipl.- Ing., Sodener
Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine automatische Aufwickelvorrichtung für Registriergeräte mit einer Aufwickelrolle für den Aufzeichnungsträger, welche eine Andrückklappe aufweist, durch die der Aufzeichnungsträger beim Einführen reibschlüssig gegen die Aufwickelrolle gehalten wird. Solche Aufwickelvorrichtungen sind allgemein bekannt und gebräuchlich.

Im allgemeinen erfolgt der Vorschub des Aufzeichnungsträgers in einem Registriergerät so, daß eine mit Stiften versehene Transportrolle den Aufzeichnungsträger von einer Vorratsrolle abwickelt und zu einer Aufwickelrolle hin transportiert. Um den Aufzeichnungsträger (zum Beispiel Papier) selbsttätig aufzuwickeln, muß dieser der Aufwickelrolle so zugeführt werden, daß er sich mit einem möglichst kleinen Wickeldurchmesser um den Aufwickelrollendurchmesser legt. Dies wird bei bekannten Vorrichtungen mit einer Andrückklappe erreicht, die mit Federkraft gegen die Aufwickelrolle anliegt. Der zwischen Aufwickelrolle und Andrückklappe geführte Aufzeichnungsträger wird durch die Drehbewegung der Aufwickelrolle und durch die von der Andrückklappe erzeugte Reibkraft eingezogen und aufgewickelt.

Ein Nachteil dieser Anordnung ist, daß die anfangs erforderliche Andrückkraft der Andrückklappe nach den ersten aufgewickelten Aufzeichnungsträgerlagen nicht mehr benötigt wird und von diesem Zeitpunkt an eher den Aufwickelvorgang behindert als fördert. Es entsteht dabei durch den ständig wachsenden Aufwickeldurchmesser ein Reibmoment, das eine unnötige Belastung für den gesamten Antrieb des Registriergerätes darstellt. Hierbei ist zu bedenken, daß mit zunehmendem Aufwickeldurchmesser der Hebelarm, mit dem die Reibkraft wirkt, zunimmt, so daß das Bremsmoment, welches den Aufwickelvorgang behindert, ebenfalls zunimmt. Auch die von der Andrückklappe erzeugte Reibkraft nimmt mit zunehmendem Aufwickeldurchmesser zu, da die Andrückklappe dann zunehmend gegen die sie in Richtung der Aufwickelrolle vorspannende Feder verschwenkt wird.

Der Erfindung liegt die Aufgabe zugrunde, eine automatische Aufwickelvorrichtung so zu gestalten, daß die zu Beginn des Aufwickelvorganges notwendige Andrückkraft mit größer werdendem Wickeldurchmesser abnimmt, so daß das Aufwickeln des Aufzeichnungsträgers möglichst leicht erfolgen kann.

Diese Aufgabe wird erfindungsgemäß durch die im Anspruch 1 angegebenen Maßnahmen gelöst.

Der wesentliche Vorteil der Erfindung besteht darin, daß die Andrückklappe nur im Anfangsstadium des Aufwickelvorganges eine hohe Andrückkraft erzeugt, die bei größer werdendem Wickeldurchmesser rasch abnimmt. Dadurch wird der Aufzeichnungsträger zuverlässig zur Aufwickelrolle hin eingezogen und dort aufgewickelt. Wenn jedoch der Aufzeichnungsträger in mehreren Lagen auf der Aufwickelrolle aufgewickelt ist und die hierdurch erzeugten Reibkräfte ausreichend hoch sind, um ein Durchdrehen der Aufwickelwalze zu verhindern, dann nimmt die Andrückkraft der Andrückklappe infolge der abnehmenden Magnetkraft rasch ab, so daß die Andrückklappe kein unerwünscht hohes, den Aufwickelvorgang behinderndes Bremsmoment erzeugt.

Konstruktiv besonders einfach ist die im Anspruch 2 angegebene vorteilhafte Ausgestaltung der Erfindung. Der Permanentmagnet kann zum Beispiel in eine Bohrung der Andrückklappe eingeklebt sein. Der Abstand des Permanentmagneten von dem Ring aus ferromagnetischem Werkstoff nimmt zwangsläufig durch die aufeinandergewickelten Lagen des Aufzeichnungsträgers während des Aufwickelvorganges zu, so daß die Magnetkraft entsprechend dem Quadrat des zunehmenden Abstandes abnimmt und damit die Reibkräfte abnehmen.

Die an sich wünschenswerte rasche Abnahme der Magnetkraft hat zur Folge, daß die Andrückklappe nach Entnahme einer vollen Aufwickelrolle nicht von selbst wieder entgegen ihrer Schwerkraft gegen eine neu eingelegte Aufwickelrolle schwenken kann. Durch Federkraft, wie es im Anspruch 3 angegeben ist, kann erreicht werden, daß die Andrückklappe selbsttätig zumindest so weit schwenkt, bis zwischen dem Permanentmagneten und dem Ring eine ausreichende magnetische Anziehung gegeben ist.

Um die Andrückkraft auf einfache Weise erhöhen und über die Breite der Aufwickelrolle gleichmäßig verteilen zu können, ist die im Anspruch 4 angegebene Ausgestaltung der Erfindung zweckmäßig.

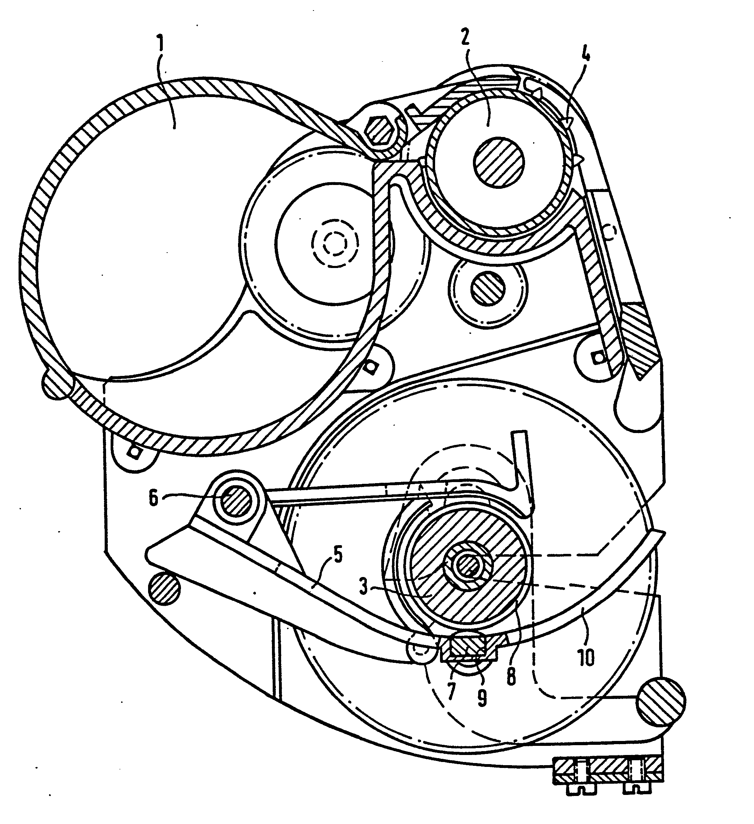

Die Erfindung läßt zahlreiche Ausführungsmöglichkeiten zu. Zu ihrer Verdeutlichung ist in der Zeichnung die erfindungsgemäße Aufwickelvorrichtung im Schnitt dargestellt und wird nachfolgend beschrieben.

Die Zeichnung zeigt einen Vorratsbehälter 1, in den eine nicht dargestellte Vorratsrolle mit dem Aufzeichnungsträger einlegbar ist. Aus dem Vorratsbehälter 1 wird der Aufzeichnungsträger über eine Transportrolle 2 zu einer Aufwickelrolle 3 geführt. Die Transportrolle 2 hat Stifte 4, welche in eine Randperforierung des Aufzeichnungsträgers zu greifen vermögen. Durch einen gleichmäßigen Antrieb der Transportrolle 2 wird für einen gleichmäßigen Vorschub des Aufzeichnungsträgers aus dem Vorratsbehälter 1 heraus gesorgt.

Die Aufwickelrolle 3 ist so angetrieben, daß der von der Transportrolle 2 geförderte Aufzeichnungsträger aufgewickelt wird, nicht aber die Aufwickelrolle 3 die Vorschubgeschwindigkeit bestimmen kann. Eine Andrückklappe 5 ist um eine Achse 6 schwenkbar gelagert und liegt mit einem Permanentmagneten 7 gegen einen Ring 8 aus ferromagnetischem Werkstoff an. Dieser Ring 8 ist auf der Aufwickelrolle 3 vorgesehen. Der Permanentmagnet 7 ist in einer Bohrung 9 der Andrückklappe 5 eingeklebt. Die Andrückklappe 5 hat ein Führungsblech 10 zum Einführen des Aufzeichnungsträgers.

Nicht dargestellt ist eine Feder, bei der es sich beispielsweise um eine Schenkelfeder handeln kann, die zusätzlich zur Magnetkraft die Andrückklappe 5 mit geringer Kraft in Richtung auf die Aufwickelrolle 3 vorspannt.

Die beschriebene automatische Aufwickelvorrichtung wirkt wie folgt. Wenn man eine neue Vorratsrolle in den Vorratsbehälter 1 eingelegt hat, dann ist der Aufzeichnungsträger über die Transportrolle 2 zu legen und über das Führungsblech 10 der Aufwickelrolle 3 zuzuführen. Sobald der Aufzeichnungsträger zwischen den Permanentmagneten 7 und die Aufwickelrolle 3 gelangt, ist die durch die Andrückkraft der Andrückklappe 5 erzeugte Reibkraft zwischen dem Aufzeichnungsträger und der Aufwickelrolle so groß, daß der Aufzeichnungsträger mitgenommen und auf der Aufwickelrolle 3 aufgewickelt wird.

## Patentansprüche

1. Automatische Aufwickelvorrichtung für Registriergeräte mit einer Aufwickelrolle (3) für den Aufzeichnungsträger, welche eine Andrückklappe (5) aufweist, durch die der Aufzeichnungsträger beim Einführen reibschlüssig gegen die Aufwickelrolle (3) gehalten wird, dadurch gekennzeichnet, daß die Andrückklappe (5) durch Magnetkraft in Richtung auf die Aufwickelrolle (3) vorgespannt ist.

2. Automatische Aufwickelvorrichtung nach Anspruch 1, dadurch gekennzeichnet, daß die Aufwickelrolle (3) einen Ring (8) aus ferromagnetischem Werkstoff und die Andrückklappe (5) einen Permanentmagneten (7) hat, welcher mit der Andrückklappe (5) gegen den Ring (8) bewegbar ist.

3. Automatische Aufwickelvorrichtung nach Anspruch 1 oder einem der folgenden, dadurch gekennzeichnet, daß die Andrückklappe (5) zusätzlich zur Magnetkraft mittels geringer Federkraft in Richtung auf die Aufwickelrolle (3) vorgespannt ist.

4. Automatische Aufwickelvorrichtung nach Anspruch 1 oder einem der folgenden, dadurch gekennzeichnet, daß die Andrückklappe (5) mehrere auf einer Linie angeordnete Permanentmagnete (7) und die Aufwickelrolle (3) entsprechend mehrere Ringe (8) aus ferromagnetischem Werkstoff hat.

## Claims

1. Automatic winding device for registering or recording apparatus, with a winding reel (3) for the recording support, which has a pressure application flap (5) whereby the recording support, on insertion, is held in frictionally locking manner against the winding reel (3), characterised in that the pressure application flap (5) is preloaded by magnetic force in the direction towards the winding reel (3).

2. Automatic winding device according to claim 1, characterised in that the winding reel (3) has a ring (8) of ferromagnetic material and the pressure application flap (5) has a permanent magnet (7) which is movable with the pressure application flap (5) towards the ring (8).

3. Automatic winding device according to claim 1, or one of the following claims, characterised in that the pressure application flap (5) is preloaded in the direction towards the winding reel (3) by means of a small amount of spring force additionally to the magnetic force.

4. Automatic winding device according to claim 1 or one of the following claims, characterised in that the pressure application flap (5) has a plurality of permanent magnets (7) arranged in a line, and the winding reel (3) has correspondingly a plurality of rings (8) made of ferromagnetic material.

## Revendications

1. Dispositif de bobinage automatique pour appareils enregistreurs, muni d'un rouleau (3) de bobinage du support d'inscription qui présente un volet presseur (5) par l'intermédiaire duquel, lors de l'insertion, le support d'inscription est maintenu par frottement contre le rouleau de bobinage (3), caractérisé par le fait que le volet presseur (5) est préchargé, par une force magnétique, en direction du rouleau de bobinage (3).

2. Dispositif de bobinage automatique selon la revendication 1, caractérisé par le fait que le rouleau de bobinage (3) présente une bague (8) en un matériau ferromagnétique, le volet presseur (5) présentant un aimant permanent (7) auquel un mouvement peut être imprimé, avec le volet presseur (5), contre ladite bague (8).

3. Dispositif de bobinage automatique selon la revendication 1 ou l'une des suivantes, caractérisé par le fait que le volet presseur (5) est préchargé en direction du rouleau de bobinage (3) au moyen d'une force élastique modeste, en plus de la force magnétique.

4. Dispositif de bobinage automatique selon la revendication 1 ou l'une des suivantes, caractérisé par le fait que le volet presseur (5) comprend plusieurs aimants permanents (7) disposés sur une ligne, le rouleau de bobinage (3) comprenant, d'une manière correspondante, plusieurs bagues (8) en un matériau ferromagnétique.